# EUROPEAN PATENT SPECIFICATION

(11) **EP 1 091 563 B1**
(45) Date of publication and mention of the grant of the patent: **07.04.2004**
(21) Application number: 00121227.3
(22) Date of filing: 29.09.2000
(51) Int. Cl.: H04N 1/333

(54) **Facsimile apparatus and facsimile communicating method**
Faksimilegerät und Faksimileübertragungsverfahren
Appareil fac-similé et procédé de communication de facsimilé

(30) Priority: 01.10.1999 JP 28193899
(43) Date of publication of application: 11.04.2001
(73) Proprietor: NEC CORPORATION, Tokyo (JP)
(72) Inventor: Matsuura, Norio, Kakegawa-shi, Shizuoka (JP)
(74) Representative: VOSSIUS & PARTNER

(56) References cited:
- EP-A- 0 883 283
- US-A- 5 357 347
- US-A- 5 896 207
- PATENT ABSTRACTS OF JAPAN vol. 1997, no. 03, 31 March 1997 (1997-03-31) -& JP 08 317231 A (RICOH CO LTD), 29 November 1996 (1996-11-29)
- PATENT ABSTRACTS OF JAPAN vol. 1997, no. 07, 31 July 1997 (1997-07-31) -& JP 09 069895 A (CANON INC), 11 March 1997 (1997-03-11)

## Description

This invention relates to a facsimile apparatus that can communicate by facsimile color image data in addition to monochrome image data.

### Description of the Related Art

When a calling terminal sends and receives image data to/from a called terminal in facsimile communication, the called terminal sends digital identification signal (DIS) to the calling terminal beforehand. DIS is a signal that represents receiving functions of the called terminal, e.g., the facsimile group numbers, the terminal constants. When the calling terminal receives data, it notifies digital transmission command (DTC) to the called terminal. DTC is a command that represents receiving functions of the calling terminal. A sending terminal (calling or called terminal) which received DIS or DTC notifies to the receiving terminal (called or calling terminal) via DCS each parameter that is used for facsimile communication.

In G3 facsimile that can handle color image data, the called terminal notifies to the calling terminal via DIS that it can receive color image data. When the calling terminal receives data, it notifies to the called terminal via DTC that it can receive color image data.

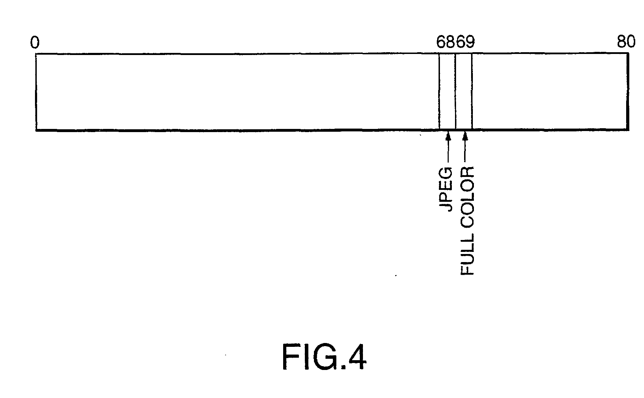

FIG. 4 shows a frame structure of DIS and DTC. According to this frame structure, the DIS and DTC frame consist of 80 bits. A facsimile apparatus with color capability uses 68th and 69th bits and notifies to the other party whether it can receive color image data. Herein the 68th bit indicates whether it is possible or not to receive an image compressed by the JPEG and the 69th bit indicates whether it is possible or not to receive a color image compressed by the JPEG.

After the notification via DIS or DTC that the receiving terminal has color capability, the sending terminal sends color image data to the receiving terminal via communication line if there were directions to send color image. Upon receiving the color image data, the receiving terminal prints out the color image. However, even if the facsimile apparatus had a color capability, the facsimile apparatus may be used as a monochrome image data receiving facsimile apparatus. That is, the printer in the facsimile apparatus having color capability may not equip three color cartridges of cyan, magenta and yellow and may only equip a black monochrome toner cartridge.

In addition, even if the cartridge is present in the printer, the cartridge may be out of ink.

Thus, due to the kind and status of the cartridge present in the printer, the receiving facsimile may not be able to receive image data appropriately.

An object of the invention is to provide a facsimile apparatus that will receive image data appropriately according to the kind of last present cartridges.

A facsimile apparatus and method according to the preambles of claims 1 and 5 is disclosed in JP-A-08 317 231. US-A-5 896 207, disclosing a colour facsimile apparatus which sends a protocol signal to the sending facsimile apparatus indicating the receiving capability, teaches receiving monochrome image data only if a colour ink level in an ink cartridge falls below a predetermined level.

A facsimile apparatus according to the invention recognizes kind or status of a cartridge present in the printer, and notifies to the sending terminal whether the facsimile apparatus can receive color image or not. In response to the notification, the sending terminal sends color image or monochrome image to the receiving facsimile apparatus.

### BRIEF DESCRIPTION OF THE DRAWINGS

This above-mentioned and other objects, features and advantages of this invention will become more apparent by reference to the following detailed description of the invention taken in conjunction with the accompanying drawings, wherein:
FIG. 1 is a block diagram of an embodiment of the facsimile apparatus of the invention;
FIG. 2 is a flow chart of a process of storing cartridge kind information of a main control portion;
FIG. 3 is a table describing relationship between the cartridge kind, DIS full color bit and JPEG bit; and
FIG. 4 is a frame structure of DIS/DTC.

### DETAILED DESCRIPTION OF THE PREFERRED EMBODIMENTS

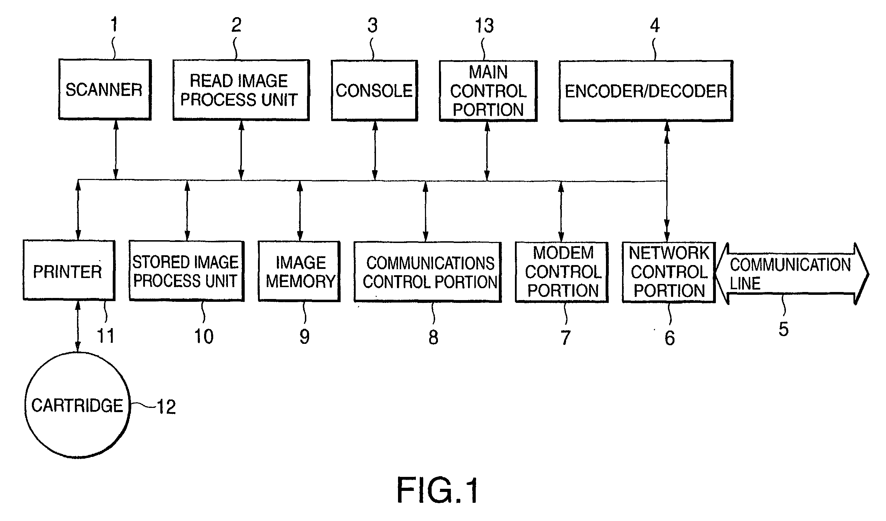

FIG. 1 is a block diagram of a facsimile apparatus of an embodiment of the invention. Referring to FIG. 1, a scanner 1 comprises, for example, a CCD image sensor (not shown) and

a document feeder (not shown), and optically reads documents and transfers into an electric image data. A read image process unit 2 applies, for example, calibration to the image data received from the scanner 1. A console 3 comprises buttons such as numerical keys (not shown), and a LCD display (not shown), and the console 3 enables a user to do various manipulations. An encoder/decoder 4 encodes the image data stored in an image memory 9 and sends it to a modem control portion 7, and decodes the image data received from the modem control portion 7 and sends it to the image memory 9. A network control portion 6 sends dialing signal (pulse signal or DTMF signal) to a communication line 5 and detects calling signal from the , communication line 5. The modem control portion 7 demodulates encoded image data received from the encoder/decoder 4 and sends the demodulated data to the communication line 5, and receives image data received from the communication line 5 and demodulates the received image data and sends the demodulated data to the encoder/decoder 4. A communications control portion 8 follows the facsimile communication procedures according to the instructions of a main control portion 13. The image memory 9 stores image data received from the read image process unit 2 or encoder/decoder 4. A stored image process unit 10 applies, e.g., calibration to the image data stored in the image memory 9 and sends the data to a printer 11. The printer 11 prints out image data received from the stored image process unit 10 to paper using ink in a cartridge 12, and feeds the paper. Color cartridges that include three color cartridge units of cyan, magenta and yellow cartridges, and/or a black monochrome cartridge may be used as the cartridge 12 of the printer 11. The main control portion 13 controls the operation of the aforementioned units.

The operation will be described below.

Facsimile communication operation and printing process of the facsimile apparatus will be described below. The main control portion 13 stores cartridge kind information that shows kind of the cartridge 12 present in the printer 11 to a storing area (not shown) in the main control portion 13. The printer 11 can get cartridge kind information, for example, based on a difference of locations of electrical contacts of the cartridge.

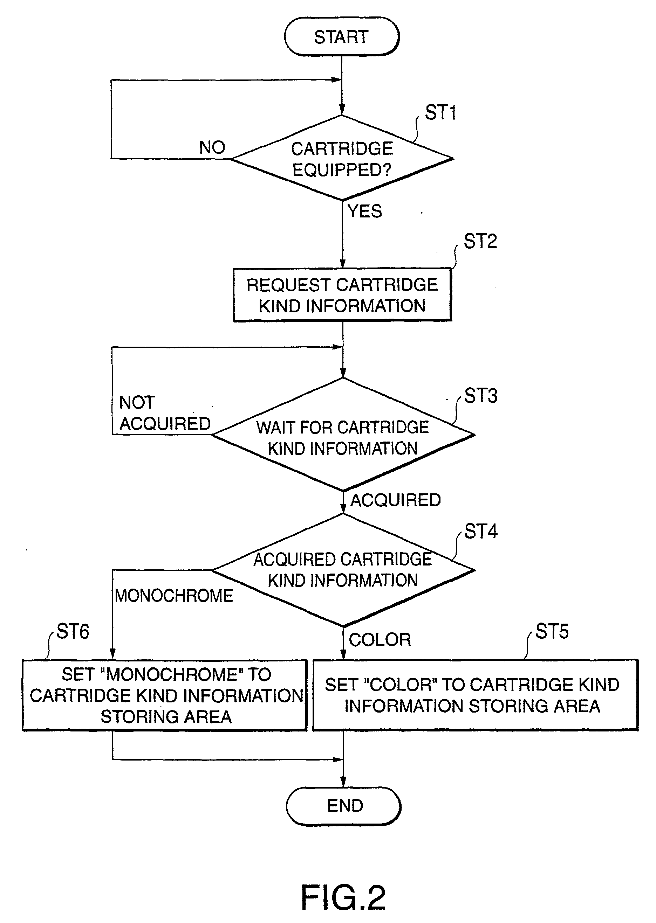

FIG. 2 is a flowchart illustrating a process of storing cartridge kind information of the main control portion 13. The main control portion 13 waits for information from printer 11 indicating whether a cartridge 12 is present or not (step ST1). In response to the notification from the printer 11 that a cartridge 12 is installed, the main control portion 13 requests from the printer 11 cartridge kind information that represents kind of the cartridge 12 present in the printer 11 (step ST2), and waits for the notification of the cartridge kind information (step ST3).

In response to receiving the request for the cartridge kind information from main control portion 13, the printer 11 determines whether the installed cartridge 12 is a color cartridge or a monochrome cartridge, and notifies the main control portion 13 of the cartridge kind information corresponding to the kind of the equipped cartridge 12. In this example, "color" is notified if a color cartridge is present and "monochrome" is notified if a monochrome cartridge is present.

Upon receiving the cartridge kind information from printer 11 (step ST4), the main control portion 13 determines cartridge kind information. That is, if the cartridge kind information is "color," "color" is stored in the storing area (step ST5), and if the cartridge kind information is "monochrome," "monochrome" is stored in the storing area (step ST6).

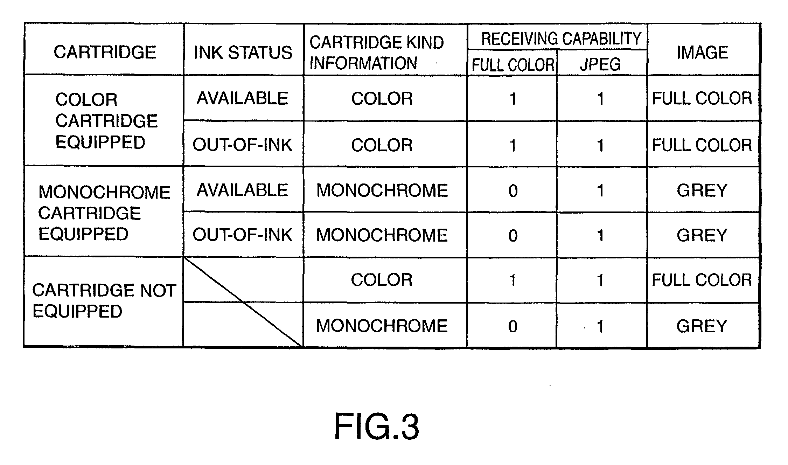

Upon receiving image data, in response to an instruction from the main control portion 13, the communications control portion 8 sends to the sending terminal via the modem control portion 7 and network control portion 6, DIS that includes the information representing receiving capability of the receiving terminal. If a color cartridge is used as a cartridge 12 in the printer 11, "color" is stored in the storing area in the main control portion 13. In this case, as shown in FIG. 3, the main control portion 13 sets "1" to DIS full color bit and JPEG bit (see FIG. 4), and instructs the communications control portion 8 to notify to the sending terminal that it can receive full color image.

Otherwise, if a monochrome cartridge is used as a cartridge 12 of the printer 11, "monochrome" is stored in the storing area in the main control portion 13. In this case, as shown in FIG. 3, the main control portion 13 sets "0" to DIS full color bit and sets "1" to JPEG bit so that the communications control portion 8 is instructed to notify to the sending terminal that the receiving terminal can receive monochrome image.

If a cartridge 12 is not present in the printer 11, i.e., if a mounting of a cartridge 12 is not detected in step ST1 of FIG. 2, the main control portion 13 sets DIS full color bit and JPEG bit based on the data in the storing area stored when the cartridge 12 is equipped.

The printer 11 detects whether ink of the cartridge 12 exists or not. For example, it sums the number of lines of image data printed out by the printer 11 and determines it is out of ink if the number of lines of the image data exceeds a certain amount. An optical sensor may be provided in the printer 11 for detecting the out-of-ink. Even if the out-of-ink of the cartridge 12 is detected, the main control portion 13 sets DIS full color bit and JPEG bit according to the stored information in the storing area.

If the cartridge 12 is not present or the cartridge 12 is out of ink, after the cartridge 12 is present or the cartridge 12 is replaced, image data is read from the image memory 9 and is sent to the printer 11.

As mentioned, the invention requests color image or monochrome image from the sending terminal based on the kind information of the cartridge 12 previously recognized, even if the cartridge 12 is not present or the cartridge 12 is out of ink. Therefore, if the cartridge 12 is not present or the used cartridge 12 is out of ink in the receiving terminal, the sending terminal sends the image data.

In prior art facsimile communication, if the cartridge was not equipped or was out of ink, communication error occurred after a communication has started so a significant delay occurred. However, according to this embodiment, such a delay will not occur.

In this embodiment, full color bit and JPEG bit is used to enable color image receiving capability, however, any other bit relating to color image may be used.

According to this embodiment, kind of the cartridge 12 present in the printer 11 is recognized, and based on the kind, either color image or monochrome image is requested to the other party. Therefore, for example, a terminal that can receive only monochrome image data would not be sent color image data.

According to the invention, if the cartridge is not present in the printer, the kind of cartridge last present is notified to the other party. This is because the kind of cartridge last present is likely to be used again. The received image data is once stored in the image storing means and the printing is done after the cartridge is installed.

If the cartridge is out-of-ink, the image data is received according to the kind of the cartridge. The received image data is once stored in the image storing means and the printing is done after the cartridge is installed.

## Claims

1. A facsimile apparatus, that is capable of communicating monochrome facsimile image data or color image data, comprising:
a printer that may be equipped with a color cartridge and/or a monochrome cartridge;
recognizing means for recognizing the kind of cartridge present in the printer; and
communications control means for notifying to the other party whether receiving color image is possible or not in response to the kind of the cartridge; and
an image memory means; **characterised in that**
if a cartridge is not present, said communications control means notifies to the other party whether receiving color image is possible or not based on information of the kind of the cartridge last present.

2. The facsimile apparatus according to claim 1, wherein if the cartridge is out of ink, said communication control means notifies to the other party whether receiving color image is possible or not based on information of the kind of the cartridge.

3. The facsimile apparatus according to claim 1, wherein the received image data is temporarily stored in the image memory means if a cartridge is not present.

4. The facsimile apparatus according to claim 2, wherein the received image data is temporarily stored in the image memory means if the cartridge is out of ink.

5. A method of communicating by facsimile monochrome image data and color image data, comprising the steps of:
recognizing the kind of a cartridge present in a printer; and
notifying to the other party whether receiving color image is possible or not based on the kind of the cartridge;
**characterised by**
storing the kind of the cartridge last present in the printer, and
if a cartridge is not present, notifying to the other party whether receiving color image is possible or not based on information of the kind of the cartridge last present.

6. The method of communicating by facsimile according to claim 5, further comprising a step of:
if the cartridge is out of ink, notifying to the other party whether receiving color image is possible or not based on information of the kind of the cartridge.

## Patentansprüche

1. Faksimilegerät, das Faksimile-Schwarzweißbilddaten und -Farbbilddaten übertragen kann, wobei das Gerät aufweist:
einen Drucker, der mit einer Farbpatrone und/oder einer Schwarzweißpatrone ausgestattet sein kann;
eine Erkennungseinrichtung zum Erkennen der im Drucker vorhandenen Patronenart; und
eine Übertragungssteuereinrichtung, um als Reaktion auf die Patronenart dem anderen Teilnehmer mitzuteilen, ob der Empfang eines Farbbilds möglich ist oder nicht; und
eine Bildspeichereinrichtung; **dadurch gekennzeichnet, daß**
wenn keine Patrone vorhanden ist, die Übertragungssteuereinrichtung dem anderen Teilnehmer aufgrund von Informationen über die zuletzt vorhandene Patronenart mitteilt, ob der Empfang eines Farbbilds möglich ist oder nicht.

2. Faksimilegerät nach Anspruch 1, wobei, wenn in einer Patrone die Farbe bzw. der Toner ausgegangen ist, die Übertragungssteuereinrichtung aufgrund von Informationen über die Patronenart mitteilt, ob der Empfang eines Farbbilds möglich ist oder nicht.

3. Faksimilegerät nach Anspruch 1, wobei die empfangenen Bilddaten vorübergehend in der Bildspeichereinrichtung abgelegt werden, wenn keine Patrone vorhanden ist.

4. Faksimilegerät nach Anspruch 2, wobei die empfangenen Bilddaten vorübergehend in der Bildspeichereinrichtung abgelegt werden, wenn in der Patrone die Farbe bzw. der Toner ausgegangen ist.

5. Verfahren zur Übertragung von Faksimile-Schwarzweißbilddaten und -Farbbilddaten, mit den folgenden Schritten:
Erkennen der in einem Drucker vorhandenen Patronenart; und
Benachrichtigen des anderen Teilnehmers, ob der Empfang eines Farbbilds möglich ist oder nicht, aufgrund der Patronenart;
**gekennzeichnet durch**
Speichern der zuletzt im Drucker vorhandenen Patronenart, und
wenn keine Patrone vorhanden ist, Benachrichtigen des anderen Teilnehmers aufgrund von Informationen zur zuletzt vorhandenen Patronenart, ob der Empfang eines Farbbilds möglich ist oder nicht.

6. Verfahren zur Faksimile- bzw. Faxübertragung nach Anspruch 5, das ferner den folgenden Schritt aufweist:
wenn in der Patrone die Farbe bzw. der Toner ausgegangen ist, Benachrichtigen des anderen Teilnehmers aufgrund von Informationen zur Patronenart, ob der Empfang eines Farbbilds möglich ist oder nicht.

## Revendications

1. Dispositif de télécopie, qui est capable de communiquer des données d'image de télécopie monochromes ou des données d'image couleurs, comportant :
une imprimante qui peut être équipée d'une cartouche d'encre couleur et/ou d'une cartouche d'encre monochrome,
des moyens de reconnaissance pour reconnaître le type de cartouche présente dans l'imprimante, et
des moyens de commande de communications pour notifier à l'autre partie si la réception d'une image couleur est possible ou non en réponse au type de la cartouche, et
des moyens de mémoire d'image,
**caractérisé en ce que**, si une cartouche n'est pas présente, lesdits moyens de commande de communications notifient à l'autre partie si la réception d'une image couleur est possible ou non sur la base des informations du type de la cartouche dernièrement présente.

2. Dispositif de télécopie selon la revendication 1, dans lequel, si la cartouche n'a plus d'encre, lesdits moyens de commande de communications notifient à l'autre partie si une réception d'image couleur est possible ou non sur la base d'informations du type de la cartouche.

3. Dispositif de télécopie selon la revendication 1, dans lequel les données d'image reçues sont temporairement mémorisées dans les moyens de mémoire d'image si une cartouche n'est pas présente.

4. Dispositif de télécopie selon la revendication 2, dans lequel les données d'images reçues sont temporairement mémorisées dans les moyens de mémoire d'image si la cartouche n'a plus d'encre.

5. Procédé de communication par télécopie de données d'image monochromes et de données d'image couleurs, comportant les étapes consistant à :
reconnaître le type d'une cartouche présente dans une imprimante, et
notifier à l'autre partie si la réception d'une image couleur est possible ou non sur la base du type de la cartouche,
**caractérisé par** la mémorisation du type de la cartouche dernièrement présente dans l'imprimante, et
si une cartouche n'est pas présente, la notification à l'autre partie du fait que la réception d'une image couleur est possible ou non sur la base d'informations du type de la cartouche dernièrement présente.

6. Procédé de communication par télécopie selon la revendication 5, comportant de plus une étape consistant à :
si la cartouche n'a plus d'encre, notifier à l'autre partie si la réception d'une image couleur est possible ou non sur la base d'informations du type de la cartouche.
